# EUROPEAN PATENT SPECIFICATION

(11) **EP 3 658 451 B1**
(45) Date of publication and mention of the grant of the patent: **03.09.2025**
(21) Application number: 18837149.6
(22) Date of filing: 26.07.2018
(51) Int. Cl.: B62M 23/02, B60K 6/00

(54) **A TRANSMISSION SYSTEM FOR A TWO-WHEELED VEHICLE**
GETRIEBESYSTEM FÜR EIN ZWEIRADFAHRZEUG
SYSTÈME DE TRANSMISSION POUR VÉHICULE À DEUX ROUES

(30) Priority: 26.07.2017 IN 201741026506
(43) Date of publication of application: 03.06.2020
(73) Proprietor: TVS Motor Company Limited, Chennai 600006 (IN)
(72) Inventor: SRINIVASA RAO, Kandregula, Chennai 600006 (IN); VINAY CHANDRAKANT, Harne, Chennai 600006 (IN)
(74) Representative: Patentanwaltskanzlei Matschnig & Forsthuber OG
(86) International application number: PCT/IB2018/055580
(87) International publication number: WO 2019/021228

(56) References cited:
- CN-U- 204 077 347
- JP-A- 2013 067 252
- JP-A- 2017 065 520

## Description

### FIELD OF INVENTION

The present invention generally relates to an internal combustion engine for a saddle type vehicle. More particularly, the present invention relates to an internal combustion engine comprising a transmission system and an electric motor unit for a saddle type two wheeled or three wheeled vehicle.

### BACKGROUND OF INVENTION

Saddle type vehicles are powered by an internal combustion (IC) engine. However, due to depleting crude oil reserves and with strict environmental norms it has become desirable to design saddle type vehicles which can be powered by alternate sources of energy. Saddle type hybrid vehicles were developed to address above described concerns. Generally, hybrid vehicles are powered by an internal combustion engine, and an electric motor. The internal combustion engine installed on such hybrid vehicle uses fuel as any other conventional internal combustion engine. The electric motor is powered by an auxiliary power source such as a battery system located in the hybrid vehicle. The internal combustion engine and the electric motor can be used in conjunction or independently to derive power for the hybrid vehicle based on different user modes. In all hybrid vehicles, a transmission system is configured to transfer the rotary motion from the internal combustion engine and the electric motor to the wheels for driving the hybrid vehicle.

One of the major challenges involved in the design of transmission system of a hybrid vehicle such as a saddle type vehicle is to improve efficiency of the system, improve operability and reduce transmission losses. Further, the transmission system including the electric motor has to be integrated with existing layout of the IC engine which is difficult. Furthermore, it is desirable to have a hybrid saddle type vehicle like a moped or a small scooter having common requirements of low cost, high efficiency, and good controllability throughout the entire speed range.

### BRIEF DESCRIPTION OF DRAWINGS

The detailed description of the present subject matter is described with reference to the accompanying figures. Same numbers are used throughout the drawings to reference like features and components.
**Fig. 1** illustrates a side view of a two-wheeled saddle type vehicle employing an embodiment of the present subject matter.
**Fig. 2a.** and **Fig. 2b****.** illustrates side view and top view respectively of the internal combustion engine with an additional gearbox according to a first embodiment of the present subject matter.
**Fig. 3****.** illustrates the cross sectional view (X-X) of the internal combustion engine and the additional gearbox according to the first embodiment of the present subject matter.
**Fig. 4****.** illustrates an exploded view of the additional gearbox operably mounted to the internal combustion engine according to the first embodiment of the present subject matter.
**Fig. 5****.** illustrates the cross sectional view (X-X) of the internal combustion engine and the exploded view of the additional gearbox according to the first embodiment of the present subject matter.
**Fig. 6a****.** and **Fig. 6b****.** illustrates side view and top view of the internal combustion engine with the additional gearbox according to the second embodiment of the present subject matter.
**Fig. 7****.** illustrates the exploded view of the additional gearbox operably mounted to the internal combustion engine according to the second embodiment of the present subject matter.
**Fig. 8****.** illustrates the cross sectional view (X-X) of the internal combustion engine and the additional gearbox according to the second embodiment of the present subject matter.
**Fig.9****.** illustrates a cross sectional view (X-X) of the internal combustion engine and the exploded view of the additional gearbox according to the second embodiment of the present subject matter.

### DETAILED DESCRIPTION

Various features and embodiments of the present invention here will be discernible from the following further description thereof, set out hereunder. In the ensuing exemplary embodiments, the vehicle is a saddle type two wheeled vehicle with a step-through frame colloquially called moped. However it is contemplated that the disclosure in the present invention may be applied to any saddle type two wheeled vehicle or three wheeled vehicle. The detailed explanation of the constitution of parts other than the present invention which constitutes an essential part has been omitted at suitable places.

Generally, a two-wheeled or three wheeled vehicle can either be a straddle type vehicle wherein the rider sits straddling the vehicle, or a step-through type vehicle having a floorboard wherein the rider can place his feet besides some luggage. In both the straddle and step-through type vehicles, an IC engine is disposed in front of a rear wheel axle of the vehicle and is supported by a frame assembly. Typically, while the frame assembly acts as a skeleton for the vehicle that supports the vehicle loads, the IC engine is functionally connected to a rear wheel of the vehicle by some end transmission means such as a sprocket and chain drive for providing torque multiplication between the engine and the rear wheel and thereby provides forward motion to the vehicle. Such saddle type vehicles have common requirements of low cost, high efficiency, good controllability throughout the entire speed range. They can either have single speed transmission system or multi-speed transmission system.

Small sized step through type saddle type vehicles of 100 cubic capacity or less have a single-speed transmission. In such vehicles there is a disadvantage of low torque at low speeds and speed limitations during high torque conditions. For example, when the saddle type vehicle is climbing a gradient on the road or if it has to pull a heavy load there is requirement of a high torque at the rear wheel to pull the vehicle, and the engine may not be able to provide the same. Further, moving at low speeds with less torque results in loss of fuel economy. Furthermore, at higher speeds, a fixed transmission ratio gives limitation to speed at which the vehicle can travel and resulting in loss of fuel economy. Hence, the engine may not be able to provide sufficient torque and the internal combustion engine may get switched off. All these drawbacks contribute to lowering of the fuel economy. Hybrid saddle type two wheeled vehicles serve to address the drawbacks of engine powered saddle type vehicles as discussed in previous paragraphs.

Typically, in hybrid vehicles the IC engine and the electric motor can be configured in uniquely different ways, but essentially can be classified according to the type powertrain system it has, which determines how the internal combustion engine and the electric motor interact with each other. There are two types namely, series configuration and parallel configuration. In series configuration, a battery system is charged by the internal combustion engine, which in turn powers the electric motor to drive the hybrid vehicle. In parallel configuration, the internal combustion engine and the electric motor work in together to generate the power that drives the hybrid vehicle. Both configurations are usually used and can be designed to enable the internal combustion engine and electric motor to provide power independently or in conjunction with one another with different modes of operation.

Further, in hybrid vehicles a traction motor is integrated within and housed in a crankcase of the IC engine. This involves extensive modification in engine layout which is undesirable. Alternatively, the traction motor may be mounted externally on the hub of the rear wheel with the drive from the traction motor directly connecting the rear wheel. The traction motor is heavy and the hub requires extensive modifications to receive the drive both from the IC engine, and the traction motor and to accommodate the rear braking systems. Since, the drive of the traction motor is directly connected to the rear wheel, the rotary output of the traction motor does not get any benefit or ratio advantage of any gearing system and end transmission means to multiply the torque output. This necessitates the use of a large powered traction motor drawing large power from the battery. This reduces the life of the battery and also reduces the vehicle range that it can operate.

In the known art, for example, Chinese Patent Application number CN204077347U discloses a hybrid powertrain. In this specification the hybrid powertrain comprises a driving motor located parallel to and at an offset from a main shaft such that it is operatively connected to the main shaft through a shift gear set. The shifting gear set includes a rotating shaft and two gears coaxially disposed on the said rotating shaft. In summary, there are critical issues involved in the design of hybrid powertrain and transmission system include improving efficiency, improving operability and to reduce transmission losses of the system while retaining attractive features such as low cost and easy drivability.

Therefore, the present subject matter seeks to provide a hybrid system for a saddle type vehicle by introduction of a traction motor operated by a battery connected thereto and working in parallel with the IC engine. The IC engine and traction motor have parallel power flow to the rear wheel.

The present subject matter additionally seeks to provide a hybrid system which can be implemented involving least modifications to the existing layout of the IC engine and the vehicle layout while retaining many key transmission components.

The present subject matter additionally seeks to provide a retrofitable traction motor that can easily be attached and detached from the saddle type vehicle when the hybrid system is not required.

The present subject matter additionally seeks to provide torque multiplication through ratio advantage by utilizing the gear train mechanism and/or the end transmission means.

The present subject matter seeks to reduce the size of the traction motor for the same torque output as compared to corresponding hub motor.

The present subject matter seeks to ease serviceability of the vehicle by providing for easy attachment and detachment of the traction motor.

The present invention presents some of the following advantages including low vehicle weight and low cost, minimal changes to existing vehicle layout, reduced fuel consumption, improved efficiency, and better optimization. Additionally, the hybrid system can be optimized at conditions of low speed, heavy load or gradient surface to improve fuel efficiency. The traction motor is retrofittable and can function independently of the IC engine. Further, torque multiplication is obtained by utilizing the gear train mechanism and/or the end transmission means.

The above functionalities are achieved by providing a saddle type hybrid vehicle comprising an IC engine having a crankshaft configured to receive rotary motion on burning of air and fuel mixture within the IC engine; an output shaft configured to receive rotary motion from the crankshaft, said output shaft operably connected to provide rotary motion output to a rear wheel of the saddle type vehicle; a first transmission mechanism interposed between the crankshaft and the output shaft, said first transmission mechanism configured to provide variable torque rotary motion output at the output shaft. As per an embodiment of the present invention, an electric motor unit is detachably mounted on an external surface of the IC engine, and is operably connected to the output shaft to provide independent and parallel rotary motion output at the output shaft along with the IC engine.

Further, the electric motor unit comprises an electric traction motor to provide rotary motion output, a second transmission mechanism interposed between the electric traction motor and the output shaft to provide variable torque rotary motion output at the output shaft, a first housing member and a second housing member assembled to form a space to accommodate the electric traction motor and the second transmission mechanism. The second transmission mechanism comprises of a motor shaft extending outward from the electric motor unit to be operably connected with the output shaft, a second one way clutch mounted on the motor shaft within the electric motor unit to permit rotary motion only from the electric traction motor to the output shaft.

The present invention along with all the accompanying embodiments and their other advantages would be described in greater detail in conjunction with the figures in the following paragraphs.

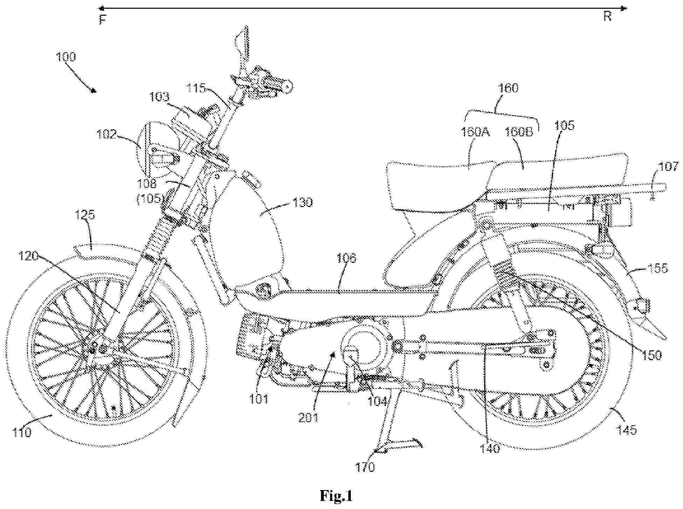

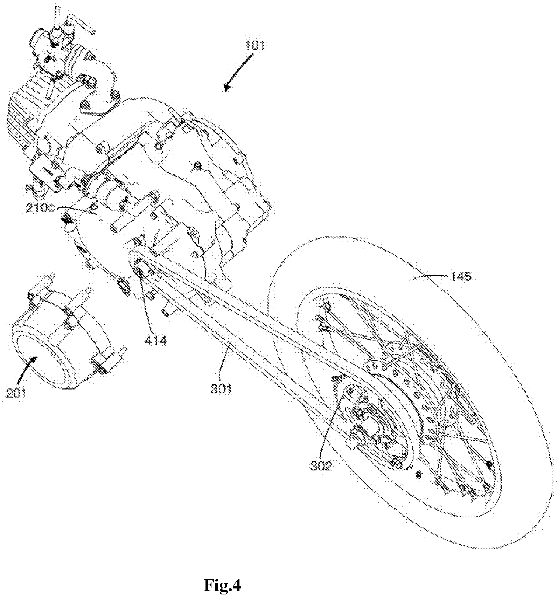

**Fig. 1****.** illustrates a left side view of an exemplary two-wheeled step-through type vehicle, in accordance with an embodiment of present invention. Said vehicle **(100)** has a mono-tube type frame assembly **(105)** extending from a front portion **(F)** to a rear portion **(R)** along a longitudinal axis **(F-R)** of said saddle type vehicle **(100).** Said frame assembly **(105)** acts as a skeleton of said vehicle. The frame assembly **(105)** extends from a head tube **(108)** in the front portion **(F)** of the vehicle till the vehicle rear portion **(R).** A steering shaft (not shown) is inserted through the head tube **(108)** and a handle bar assembly **(115)** is pivotally disposed on it. The steering shaft is connected to a front wheel **(110)** by front suspension(s) **(120).** A front fender **(125)** is disposed above the front wheel **(110)** for covering at least a portion of the front wheel **(110).** A fuel tank **(130)** is mounted on a rearwardly and downwardly extending member of the frame assembly **(105),** said member extending from the head tube **(108).** The frame assembly **(105)** forms a substantially horizontal step-through portion **(106)** with a floorboard to enable step-through mounting of a rider and to assist in carrying heavy loads. The IC engine **(101)** is mounted on the frame assembly **(105)** below the step-through portion **(106)** forming a low slung engine mounting. In an embodiment, a piston axis of the engine is horizontal i.e. parallel to a longitudinal axis of said vehicle **(100).** A swing arm **(140)** is swingably connected to the frame assembly **(105).** A rear wheel **(145)** is rotatably supported by the swing arm **(140).** One or more rear suspension(s) **(150)** are provided for ensuring riding comfort. Said rear suspension(s) are connected to the swing arm **(140)** at one end and to a portion of a rear frame member of the frame assembly **(105)** at the other end. A rear fender **(155)** is disposed above the rear wheel **(145).** A seat assembly **(160A, 160B)** is disposed rearwardly of the step-through portion **(106)** for seating of the rider. In an embodiment, the seat assembly **(160)** includes a rider seat **(160A)** and a pillion seat **(160B).** Further, the seat assembly **(160)** is positioned above the rear wheel **(145).**The vehicle is supported by a centre stand **(170)** mounted to the frame assembly **(105).** The IC engine **(101)** is connected to the rear wheel **(145)** through a transmitting means. In one embodiment, the transmitting means includes an engine sprocket **(414)** which is linked to the rear wheel **(145)** through a chain drive (shown in Fig.4).

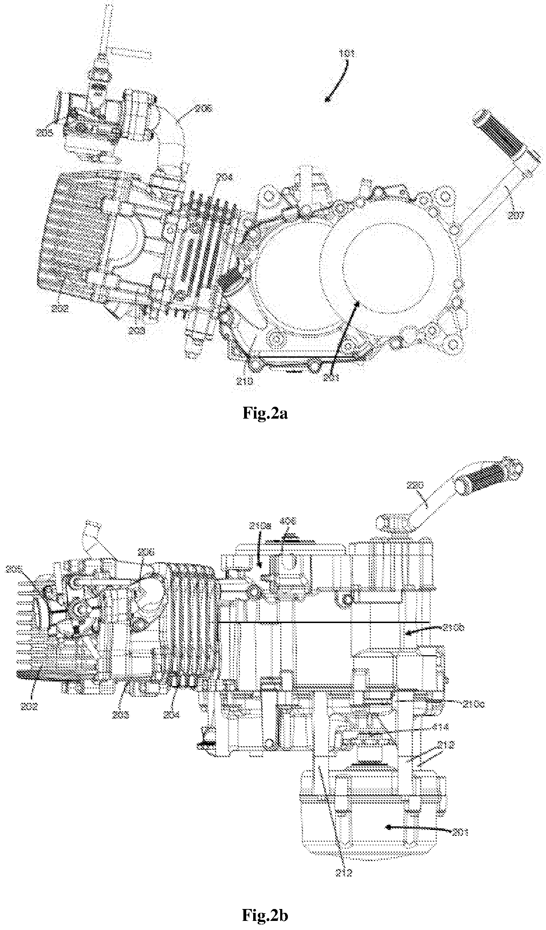

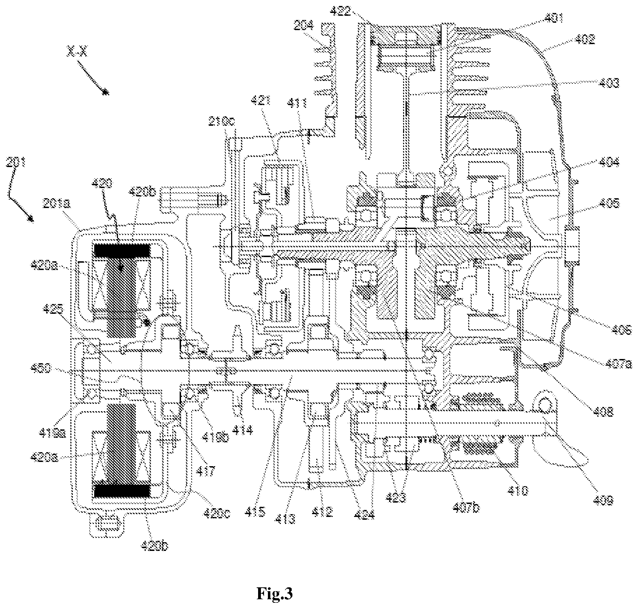

**Fig. 2a** illustrates a side view of the IC engine **(101)** and **Fig. 2b****.** illustrates the top view of the IC engine in accordance with an embodiment of the present invention. The IC engine **(101)** is made up of a cylinder head **(203),** cylinder block **(204),** crankcase **(210)** and a cylinder head cover **(202).** The crankcase **(210)** is made up RH crankcase **(210a),** LH crankcase **(210b),** and a clutch cover **(210c).** The crankcase **(210)** houses the kickstarter assembly **(not shown)** and comprises the kickshaft **(220)** (shown in Fig.2b) which is connected to a ratchet mechanism **(not shown).** When the kickshaft **(220)** is actuated by the foot of a rider, the ratchet moves and engages with another ratchet operably connected to the crankshaft **(407)** (shown in Fig.3) via a starter gear train **(404)** (shown in Fig.3). On withdrawal of pressure from the foot, the return spring withdraws the kickshaft to starting position.

The clutch cover **(210c)** is disposed on the left hand side of the IC engine (101) adjacent to the LH crankcase **(210b)** and encloses a first centrifugal clutch **(421)** (shown in Fig.3) and related transmission gear mechanisms. The IC engine **(101)** includes an air intake system **(205, 206),** and an exhaust system (not shown). The RH crankcase **(210a)** encloses a wet magneto assembly **(406)** disposed on the right hand side **(407a)** (shown in Fig.3) of the crankshaft. The wet magneto assembly **(406)** is configured to rotate along with the crankshaft to generate power which recharges a battery. Further, a centrifugal fan is disposed in front of the magneto assembly **(406)** forming part of a cooling system to cool the IC engine **(101).** A shroud **(402)** encloses the centrifugal fan **(405)** (shown in Fig.3) and covers the cylinder head **(203)** and cylinder block **(204).** The centrifugal fan **(405)** rotates along with the crankshaft and draws atmospheric air inside and circulates it throughout the interior portions of the shroud **(402).** The IC engine **(101)** as per an aspect of the present invention supports an electric motor unit **(201).**

As per one embodiment, the electric motor unit **(201)** is disposed adjacent to the clutch cover **(210c)** and mounted on it. The clutch cover **(210c)** and the electric motor unit **(201)** comprises plurality of bosses **(212)** which are disposed at regular intervals around each of their outer peripheries. In the present embodiment said bosses **(212)** include holes to receive fasteners. The electric motor unit **(201)** is mounted on the clutch cover **(210c)** through said plurality of bosses **(212)** and is secured thereto through with fasteners. Besides aiding in mounting said motor unit **(201)** on the clutch cover **(210c),** said bosses **(212)** also aid in accommodating the engine sprocket **(414)** in a space between the electric motor unit **(201)** and the clutch cover **(210c).** Particularly, said bosses **(212)** are made to have sufficient length to in order to accommodate the engine sprocket **(414).**

**Fig. 3****.** illustrates a cross sectional view of the internal combustion engine **(101)** and the electric motor unit **(201)** according to an embodiment of the present subject matter. The IC engine comprises a reciprocating piston **(401)** reciprocating within the cylinder block **(204),** and a crankshaft **(407).** Combustion occurs when air fuel mixture is burnt in the combustion chamber **(422),** resulting in transfer of pressure created during combustion to the reciprocating piston **(401).** The reciprocating motion of the piston is converted to rotary motion of the crankshaft **(407)** having a right hand side **(407a)** and a left hand side **(407b);** by a connecting rod **(403)** through a slider crank mechanism. The rotary motion of the crankshaft **(407)** is transferred to the engine sprocket **(414)** through a transmission system including a first transmission mechanism. The first transmission mechanism comprises a first centrifugal clutch **(421)** disposed on the left hand side **(407b)** of the crankshaft **(407).** A first driving gear **(411)** is freely mounted to the crankshaft **(407)** and connected to the crankshaft by the first centrifugal clutch **(421).** The first centrifugal clutch **(421)** is designed to engage only at a particular rotational speed of the IC engine. This rotational speed is usually just above idling rotational speed configured and designed for the IC engine. Hence, if the throttle is not operated by the rider, rotational speed of the IC engine decreases to idling speed and the transmission system is disengaged from the crankshaft **(407).** Once, throttle is operated, the first centrifugal clutch **(421)** engages, and the rotary motion is transmitted to the rest of the transmission system. Once, the vehicle speed is above idling speed and the first centrifugal clutch **(421)** is engaged the rotary motion is transferred to the first driving gear **(411).** The first driving gear **(411)** is meshed with a first driven gear **(412),** and the transmission ratio between the first driving gear **(411)** and first driven gear **(412)** provides the first speed reduction for the IC engine. The first driven gear **(412)** is disposed on an output shaft **(415)** and mounted on bearings. This gear train setup provides the transmission ratio operable for the engine. The first driven gear **(412)** is mounted on a first one way clutch **(413)** to prevent the rotary motion drive from transferring back to the crankshaft **(407b)** from the output shaft **(415).** Particularly, as per an embodiment of the present invention, the engine sprocket **(414)** which is disposed at one end of the the output shaft **(415)** and outside the LH clutch cover **(210c)** receives rotary motion from the output shaft **(415)** of the transmission system. As may be seen in Fig.4. a chain **(301)** connects the engine sprocket **(414)** to a corresponding wheel sprocket **(302)** on the rear wheel **(145).** This way rotary motion is transferred to the rear wheel **(145).** Further, as shown in Fig.3, the engine sprocket **(414)** comprises an outer gear teeth portion and an inner annular portion **(414a)** comprising internal splines and which is configured to receive a motor shaft **(425)** from the electric motor unit **(201).** A part of the motor shaft **(425)** projects outwards and comprises external splined portion **(415a)** which correspond to the internal splines on the engine sprocket **(414).** Similarly, the output shaft **(415)** of the transmission system of the IC engine **(101)** comprises external splined portion **(425a).** Thus, the engine sprocket **(414)** receives the output shaft **(415)** from one end and the motor shaft **(425)** of the electric motor unit **(201)** from the other end. For example, in the present embodiment said engine sprocket **(414)** receives the output shaft **(415)** from the right side and the motor shaft **(425)** of the electric motor unit **(201)** from the left side.

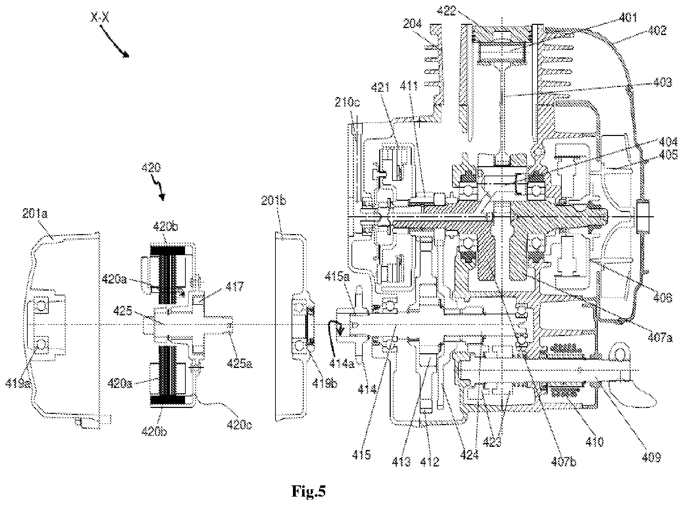

**Fig. 4****. and** **Fig.5** illustrate exploded views depicting mounting of the electric motor unit **(201)** to the IC engine **(101)** according to one embodiment of the present subject matter. Further the functional and operational aspects involved in the working of the electric motor unit **(201)** are also explained with respect to **Fig.4** **and** **Fig.5****.**

The electric motor unit **(201)** as per an embodiment of the present subject matter comprises an electric traction motor **(420)** (shown in Fig.5) to provide rotary motion output connected to the output shaft **(415)** through connection to the engine sprocket **(414).** The electric motor unit **(201)** also includes a second transmission mechanism **(450)** (shown in Fig.3) interposed between the electric traction motor **(420)** and the output shaft **(415)** to provide variable torque rotary motion output at the output shaft **(415).** The second transmission mechanism **(450)** comprises the motor shaft **(425)** extending outward from the electric motor unit **(201)** to be operably connected with the output shaft **(415);** and a second one way clutch **(417)** mounted on the motor shaft **(425)** within the electric motor unit **(201)** to permit rotary motion only from the electric traction motor **(420)** to the output shaft **(415).** A first housing member **(201a)** and a second housing member **(201b)** is assembled from either side to form a space therein to accommodate the electric traction motor **(420)** and the second transmission mechanism **(450).**

In the forgoing paragraphs two different embodiments of the present invention is described.

As per a first embodiment of the present subject matter the electric motor unit **(201)** is disposed beyond the clutch cover **(210c).** The electric motor unit **(201)** provides the electric drive mode to be engaged. The second transmission mechanism **(450)** in the first embodiment comprises the motor shaft **(425)** and the second one way clutch **(417).** The electric traction motor **(420)** is mounted on the motor shaft **(425)** and transfers the rotary motion output during operation to the engine sprocket **(414)** through a second one way clutch **(417)** to permit rotary motion only from the traction motor **(420)** to the engine sprocket **(414)** and not vice versa. The motor shaft **(425)** is supported within the electric motor unit **(201)** by two roller bearings **(419a** & **419b)** on either side of the electric motor unit **(201).** This arrangement ensures that, the traction motor **(420)** provides parallel rotary motion output at the engine sprocket **(414)** along with the first transmission mechanism **(411, 412).** The traction motor **(420)** comprises of a circularly disposed stationary stator core **(420a)** fixed to the motor shaft **(425),** and coaxially mounted ring shaped rotor core **(420b)** freely mounted to the motor shaft **(425)** over the stationary stator core **(420a).** The rotor core **(420b)** has a rotor hub **(420c)** attached to the second one way clutch **(417),** which in turn is operably mounted to the motor shaft **(425).**

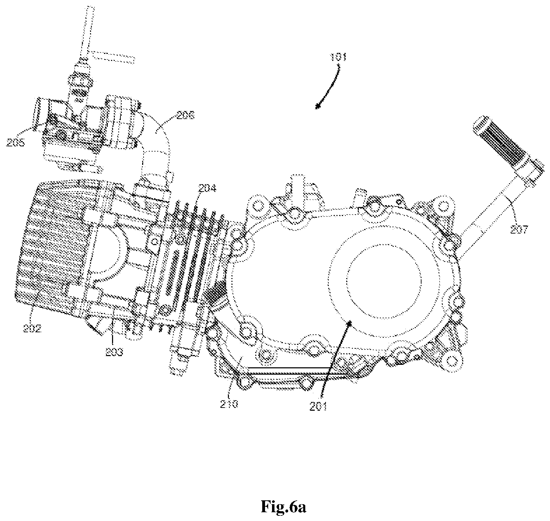

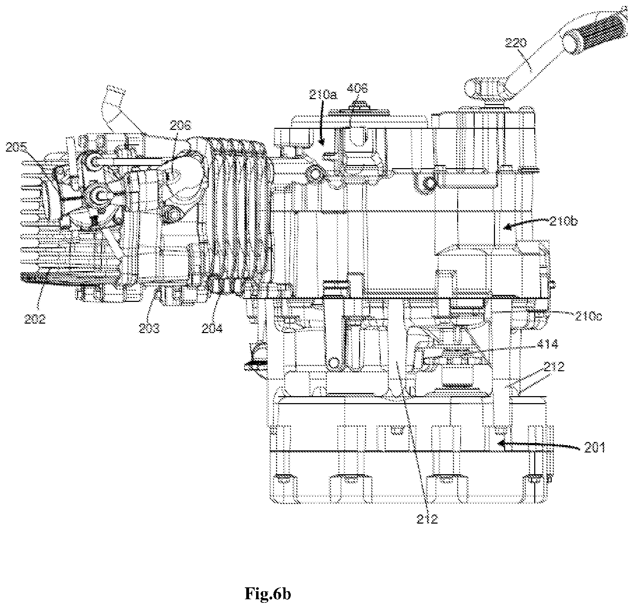

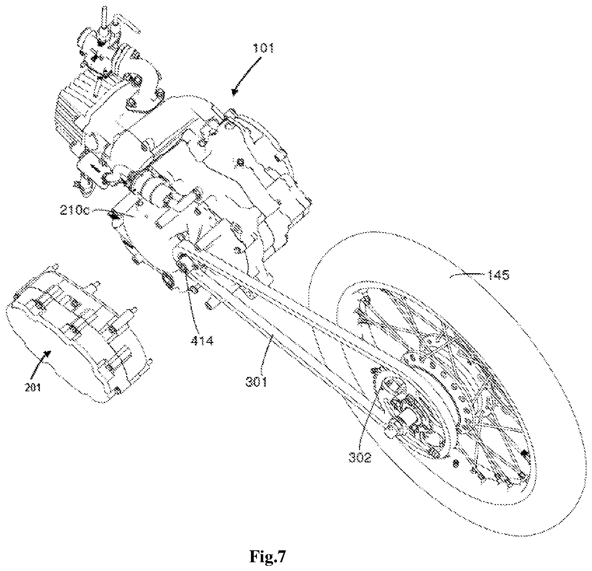

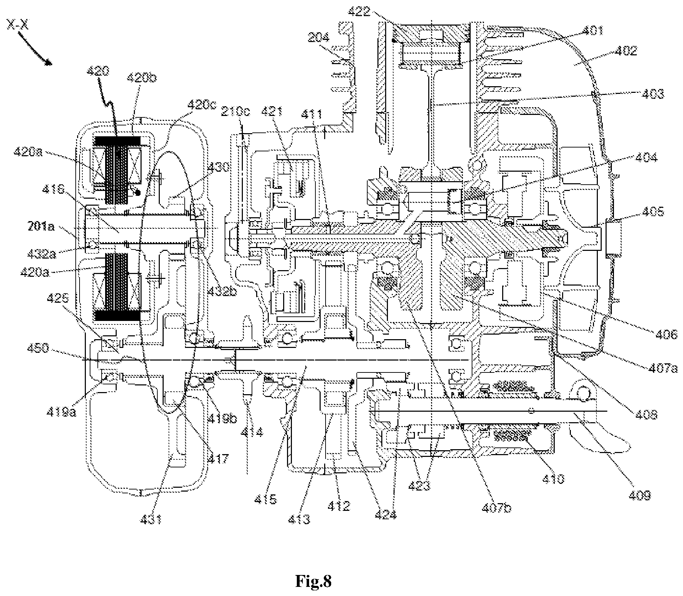

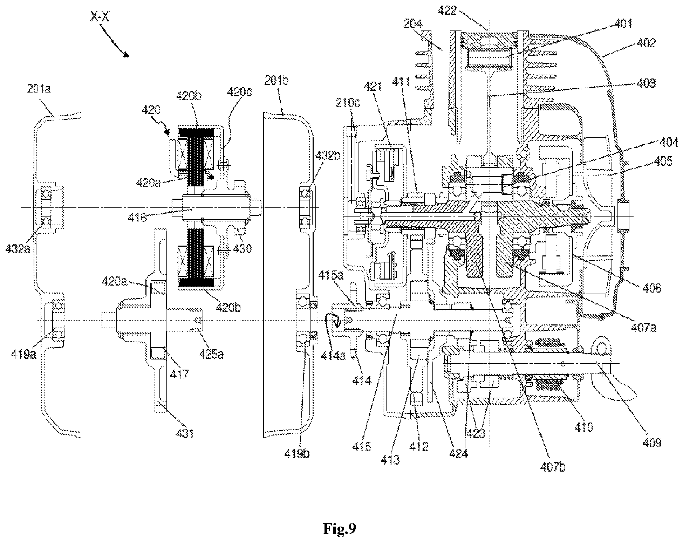

A second embodiment of the present invention is explained with reference to Figs.6a-9. The electric motor unit **(201)** comprises the second transmission mechanism **(450)** in accordance with the second embodiment of the invention. Figures 6a-7 depict the location and mounting of the electric motor unit **(201)** which is the same as that explained in the earlier paragraphs. As may be seen in Fig.8 and Fig.9, the second transmission mechanism **(450)** in the second embodiment comprises of the motor shaft **(425),** an intermediate shaft **(416)** mounted parallel to the motor shaft **(425),** and said electric traction motor **(420)** is mounted on the intermediate shaft **(416).** The intermediate shaft **(416)** is supported by a pair of second roller bearings **(432a** and **432b),** each of said pair of second roller bearing is disposed on the first housing member **(201a)** and the second housing member **(201b)** above the pair of first roller bearings **(419a** and **419b).**

A second driving gear **(430)** is rigidly mounted on said intermediate shaft **(416)** and meshed with a second driven gear **(431)** rigidly mounted on said motor shaft **(425).** Hence, in this arrangement, there is a geartrain arrangement between the electric traction motor **(420)** and the motor shaft **(425)** to vary torque output. This provides a torque multiplication due to the ratio increase because of the geartrain arrangement (second driving gear **430,** second driven gear **431).** The advantages of the second embodiment are that, a smaller capacity electric traction motor can be used as compared to the first embodiment due to the advantage obtained with the torque multiplication. The traction motor **(420)** comprises of the circularly disposed stationary stator core **(420a)** fixed to the intermediate shaft **(416),** and coaxially mounted ring shaped rotor core **(420b)** freely mounted to the intermediate shaft **(416)** over the stationary stator core **(420a).** The rotor core **(420b)** has a rotor hub **(420c)** attached to the second driving gear **(430),** which in turn is securely mounted to the intermediate shaft **(416).**

The invention is preferably applicable for hybrid two or three wheeled saddle type vehicles with small engines. In IC engines having capacity less than or equal 100cc, the present invention offers advantages of low cost, and less weight. Such hybrid vehicles implementing the present invention are advantageous in such small vehicle as they permit easy maneuvering and handling during stop and go traffic conditions, as well as contribute to less cost and less weight. However, the present invention can also be applicable for higher capacity engines.

## Claims

1. A saddle type vehicle **(100)** comprising:
an internal combustion (IC) engine **(101),** said internal combustion (IC) engine **(101)** being configured to directly mount an electric motor unit **(201)** on said internal combustion (IC) engine **(101),** wherein said internal combustion (IC) engine **(101)** includes:
a crankcase **(210);**
a crankshaft **(407),** said crankshaft **(407)** being supported by said crankcase **(210),**
said crankshaft **(407)** being configured to receive rotary motion on burning of air and fuel mixture within said internal combustion (IC) engine **(101);**
an output shaft **(415),** said output shaft **(415)** being configured to receive rotary motion from said crankshaft **(407),**
said output shaft **(415)** being operably connected to a rear wheel **(145)** to provide rotary motion output to said rear wheel **(145)** of said saddle type vehicle **(100);**
a first transmission assembly, said first transmission assembly being interposed between said crankshaft **(407)** and said output shaft **(415),**
said first transmission assembly being configured to provide variable torque rotary motion output at said output shaft **(415);** and
an engine sprocket **(414);**
wherein,
said internal combustion (IC) engine **(101)** includes an electric motor unit **(201)** being detachably mounted on said external surface of said crankcase **(210)** of said internal combustion (IC) engine **(101),**
said electric motor unit **(201)** includes
an electric traction motor **(420),** said electric traction motor **(420)** provides rotary motion output,
a second transmission assembly **(450),** said second transmission assembly **(450)** interposed between said electric traction motor **(420)** and said output shaft **(415)** to provide variable torque rotary motion output at said output shaft **(415),** and
a first housing member **(201a)** and a second housing member **(201b),** said first housing member **(201a)** and said second housing member **(201b)** being assembled to form a space to accommodate said electric traction motor **(420)** and said second transmission assembly **(450),** wherein said second transmission assembly **(450)** includes
a second one-way clutch **(417),** said second one way clutch **(417)** mounted on a motor shaft **(425)** within said electric motor unit **(201)** to permit rotary motion only from said electric traction motor **(420)** to said output shaft **(415),** and
said motor shaft **(425)** extending outwardly from said electric motor unit **(201),**
**characterized in that** said engine sprocket **(414)** comprising an inner annular portion **(414a),** said inner annular portion **(414a)** comprising internal splines and said inner annular portion **(414a)** being configured to receive an external splined portion **(415a)** of said output shaft **(415)** from one end and an external splined portion **(425a)** of said motor shaft **(425)** of said electric motor unit **(201)** from said other end;
wherein said motor shaft **(425)** being directly coupled to said output shaft **(415)** to provide power to said output shaft **(415),** and
wherein said output shaft **(415)** being configured to receive power either only from said electric motor unit **(201)** or in combination with power from said internal combustion (IC) engine **(101).**

2. The saddle type vehicle **(100)** as claimed in claim 1, wherein said second transmission assembly **(450)** comprising:
an intermediate shaft **(416),** said intermediate shaft **(416)** being mounted parallel to said motor shaft **(425),** said electric traction motor **(420)** being mounted on said intermediate shaft **(416);**
a second driving gear **(430),** said second driving gear **(430)** being rigidly mounted on said intermediate shaft **(416);** and
a second driven gear **(431),** said second driven gear **(431)** being rigidly mounted on said motor shaft **(425)** and being configured to be meshed with said second driving gear **(430)** to vary torque output between said intermediate shaft **(416)** and said motor shaft **(425).**

3. The saddle type vehicle **(100)** as claimed in claim 1, wherein said engine sprocket **(414)** provides rotary motion output to said rear wheel **(145)** of said saddle type vehicle by a chain **(301).**

4. The saddle type vehicle **(100)** as claimed in claim 1, wherein said Internal Combustion (IC) engine **(101)** comprises a clutch cover **(210c),** said clutch cover **(210c)** comprising a plurality of mounting bosses **(212),** said mounting bosses **(212)** being disposed around an outer periphery of said clutch cover **(210c),** and said mounting bosses **(212)** being configured to receive corresponding externally mounted plurality of bosses **(212)** of said electric motor unit **(201).**

5. The saddle type vehicle **(100)** as claimed in claim 1 or claim 2, wherein said electric traction motor **(420)** comprises:
a circular and stationary stator core **(420a),** said circular and stationary stator core **(420a)** being fixed to one of said motor shaft **(425)** and said intermediate shaft **(416);** and
a coaxially mounted ring shaped rotor core **(420b),** said coaxially mounted ring shaped rotor core **(420b)** being freely mounted to one of said motor shaft **(425)** and said intermediate shaft **(416).**

6. The saddle type vehicle **(100)** as claimed in claim 1 or claim 2, wherein said motor shaft **(425)** being supported by a pair of first roller bearings **(419a** and **419b),** each roller bearing of said pair of first roller bearings **(419a,419b)** being disposed on said first housing member **(201a)** and said second housing member **(201b).**

7. The saddle type vehicle **(100)** as claimed in claim 2, wherein said intermediate shaft **(416)** being supported by a pair of second roller bearings **(432a** and **432b),** each of said pair of second roller bearing being disposed on said first housing member **(201a)** and said second housing member **(201b)** above said pair of first roller bearings **(419a** and **419b).**

8. The saddle type vehicle **(100)** as claimed in claim 1, wherein said first transmission mechanism **(411, 412, 421, 413)** comprises:
a first centrifugal clutch **(421),** said first centrifugal clutch **(421)** being disposed on a left hand side of said crankshaft **(407);**
a first driving gear **(411),** said first driving gear **(411)** being freely mounted to said crankshaft **(407)** and being connected to said crankshaft **(407)** by said first centrifugal clutch **(421);**
a first driven gear **(412),** said first driven gear **(412)** being disposed on said output shaft **(415);** and
a first one way clutch **(413),** said first one way clutch **(413)** being disposed on said output shaft **(415),** said first driven gear **(412)** mounted on said first one way clutch **(413),** and said first one way clutch **(413)** being configured to prevent the rotary motion drive from transferring back to said crankshaft **(407)** from said output shaft **(415).**

9. The saddle type vehicle **(100)** as claimed in claim 1, wherein said Internal Combustion (IC) engine **(101)** has a combustion chamber volume, said combustion chamber volume capacity being less than or equal to 100 cubic centimeters (cc).

## Patentansprüche

1. Sattelfahrzeug (100), aufweisend:
einen Verbrennungsmotor (101), wobei der Verbrennungsmotor (101) dazu eingerichtet ist, eine Elektromotoreinheit (201) direkt an dem Verbrennungsmotor (101) angebracht zu haben, wobei der Verbrennungsmotor (101) beinhaltet:
ein Kurbelgehäuse (210);
eine Kurbelwelle (407), wobei die Kurbelwelle (407) von dem Kurbelgehäuse (210) getragen wird,
wobei die Kurbelwelle (407) dazu eingerichtet ist, eine Drehbewegung bei der Verbrennung eines Luft- und Kraftstoffgemischs innerhalb des Verbrennungsmotors (101) zu erlangen;
eine Abtriebswelle (415), wobei die Abtriebswelle (415) dazu eingerichtet ist, eine Drehbewegung von der Kurbelwelle (407) zu erlangen,
wobei die Abtriebswelle (415) betriebsmäßig mit einem Hinterrad (145) verbunden ist, um abtriebseitig eine Drehbewegung an das Hinterrad (145) des Sattelfahrzeugs (100) zu liefern;
eine erste Getriebebaugruppe, wobei die erste Getriebebaugruppe zwischen der Kurbelwelle (407) und der Abtriebswelle (415) eingefügt ist,
wobei die erste Getriebebaugruppe dazu eingerichtet ist, abtriebseitig eine Drehbewegung mit variablem Drehmoment an der Abtriebswelle (415) zu liefern; und
ein Motor-Kettenrad (414);
wobei der Verbrennungsmotor (101) eine Elektromotoreinheit (201) beinhaltet, die an der Außenfläche des Kurbelgehäuses (210) des Verbrennungsmotors (101) abnehmbar angebracht ist,
wobei die Elektromotoreinheit (201) beinhaltet:
einen elektrischen Fahrmotor (420), wobei der elektrische Fahrmotor (420) abtriebseitig eine Drehbewegung liefert,
eine zweite Getriebebaugruppe (450), wobei die zweite Getriebebaugruppe (450) zwischen dem elektrischen Fahrmotor (420) und der Abtriebswelle (415) eingefügt ist, um abtriebseitig eine Drehbewegung mit variablem Drehmoment an der Abtriebswelle (415) zu liefern, und
einen ersten Gehäusebauteil (201a) und einen zweiten Gehäusebauteil (201b), wobei der erste Gehäusebauteil (201a) und der zweite Gehäusebauteil (201b) einen Raum zur Aufnahme des elektrischen Fahrmotors (420) und der zweiten Getriebebaugruppe (450) bildend aufgebaut sind, wobei die zweite Getriebebaugruppe (450)
eine zweite Einwegkupplung (417), wobei die zweite Einwegkupplung (417) in der Elektromotoreinheit (201) auf einer Motorwelle (425) angebracht ist, um eine Drehbewegung nur von dem elektrischen Fahrmotor (420) zu der Abtriebswelle (415) zu ermöglichen, und
die Motorwelle (425), die von der Elektromotoreinheit (201) nach außen verläuft, beinhaltet,
**dadurch gekennzeichnet, dass**
das Motorkettenrad (414) einen inneren ringförmigen Bereich (414a) aufweist, wobei der innere ringförmige Bereich (414a) Innenverzahnungen aufweist und der innere ringförmige Bereich (414a) dazu eingerichtet ist, einen äußeren gezähnten Abschnitt (415a) der Abtriebswelle (415) von einem Ende her und einen äußeren gezähnten Abschnitt (425a) der Motorwelle (425) der Elektromotoreinheit (201) von dem anderen Ende her aufzunehmen;
wobei die Motorwelle (425) direkt mit der Abtriebswelle (415) gekoppelt ist, um Antriebsleistung an die Abtriebswelle (415) zu liefern, und
wobei die Abtriebswelle (415) dazu eingerichtet ist, Antriebsleistung entweder nur von der Elektromotoreinheit (201) oder in Kombination mit Antriebsleistung vom Verbrennungsmotor (101) zu empfangen.

2. Sattelfahrzeug (100) nach Anspruch 1, wobei die zweite Getriebebaugruppe (450) aufweist:
eine Zwischenwelle (416), wobei die Zwischenwelle (416) parallel zu der Motorwelle (425) montiert ist, wobei der elektrische Fahrmotor (420) auf der Zwischenwelle (416) angebracht ist;
ein zweites Antriebszahnrad (430), wobei das zweite Antriebszahnrad (430) starr auf der Zwischenwelle (416) montiert ist; und
ein zweites angetriebenes Zahnrad (431), wobei das zweite angetriebene Zahnrad (431) starr auf der Motorwelle (425) montiert ist und dazu eingerichtet ist, mit dem zweiten antreibenden Zahnrad (430) zu kämmen, zum abtriebseitigen Variieren des Drehmoments zwischen der Zwischenwelle (416) und der Motorwelle (425).

3. Sattelfahrzeug (100) nach Anspruch 1, wobei das Motorkettenrad (414) abtriebseitig Drehbewegung an das Hinterrad (145) des Sattelfahrzeugs über eine Kette (301) liefert.

4. Sattelfahrzeug (100) nach Anspruch 1, wobei der Verbrennungsmotor (101) eine Kupplungsabdeckung (210c) aufweist, welche eine Vielzahl von Montagevorsprüngen (212) aufweist, wobei die Montagevorsprünge (212) um einen Außenumfang der Kupplungsabdeckung (210c) herum angeordnet sind und die Montagevorsprünge (212) dazu eingerichtet sind, außenseitig angebracht eine korrespondierende Vielzahl von Vorsprüngen (212) der Elektromotoreinheit (201) aufnehmen.

5. Sattelfahrzeug (100) nach Anspruch 1 oder Anspruch 2, wobei der elektrische Fahrmotor (420) aufweist:
einen kreisförmigen und stationären Statorkern (420a), welcher an der Motorwelle (425) oder der Zwischenwelle (416) fest angebracht ist; und
einen koaxial montierten ringförmigen Rotorkern (420b), welcher an der Motorwelle (425) oder der Zwischenwelle (416) frei montiert ist.

6. Sattelfahrzeug (100) nach Anspruch 1 oder Anspruch 2, wobei die Motorwelle (425) mit einem Paar erster Wälzlager (419a und 419b) gelagert ist, wobei jedes Wälzlager des Paares erster Wälzlager (419a, 419b) an dem ersten Gehäusebauteil (201a) bzw. dem zweiten Gehäusebauteil (201b) angeordnet ist.

7. Sattelfahrzeug (100) nach Anspruch 2, wobei die Zwischenwelle (416) mit einem Paar zweiter Wälzlager (432a und 432b) gelagert ist, wobei jedes des Paars zweiter Wälzlager an dem ersten Gehäusebauteil (201a) bzw. dem zweiten Gehäusebauteil (201b) über dem Paar erster Wälzlager (419a und 419b) angeordnet ist.

8. Sattelfahrzeug (100) nach Anspruch 1, wobei der erste Übertragungsmechanismus (411, 412, 421, 413) umfasst:
eine erste Fliehkraftkupplung (421), wobei die erste Fliehkraftkupplung (421) auf einer linken Seite der Kurbelwelle (407) angeordnet ist;
ein erstes Antriebszahnrad (411), wobei das erste Antriebszahnrad (411) an der Kurbelwelle (407) frei montiert ist und durch die erste Fliehkraftkupplung (421) mit der Kurbelwelle (407) verbunden ist;
ein erstes Abtriebszahnrad (412), wobei das erste Abtriebszahnrad (412) auf der Abtriebswelle (415) angeordnet ist; und
eine erste Einwegkupplung (413), wobei die erste Einwegkupplung (413) auf der Abtriebswelle (415) positioniert ist, das erste angetriebene Zahnrad (412) auf der ersten Einwegkupplung (413) montiert ist und die erste Einwegkupplung (413) dazu eingerichtet ist, zu verhindern, dass die Antriebsdrehbewegung von der Abtriebswelle (415) zurück auf die Kurbelwelle (407) übertragen wird.

9. Sattelfahrzeug (100) nach Anspruch 1, wobei der Verbrennungsmotor (101) ein Verbrennungskammervolumen aufweist, wobei die Kapazität des Verbrennungskammervolumens weniger als oder gleich 100 Kubikzentimeter (cc) ist.

## Revendications

1. Véhicule de type selle (100) comprenant :
un moteur à combustion interne (CI) (101), ledit moteur à combustion interne (CI) (101) étant configuré pour avoir une unité de moteur électrique (201) montée directement sur ledit moteur à combustion interne (CI) (101), ledit moteur à combustion interne (CI) (101) incluant :
un carter (210) ;
un vilebrequin (407), ledit vilebrequin (407) étant supporté par ledit carter (210),
ledit vilebrequin (407) étant configuré pour recevoir un mouvement rotatif lors de la combustion du mélange d'air et de carburant à l'intérieur dudit moteur à combustion interne (CI) (101) ;
un arbre de sortie (415), ledit arbre de sortie (415) étant configuré pour recevoir le mouvement rotatif dudit vilebrequin (407),
ledit arbre de sortie (415) étant relié de manière opérationnelle à une roue arrière (145) pour fournir un mouvement rotatif à ladite roue arrière (145) dudit véhicule de type selle (100) ;
un premier ensemble de transmission, ledit premier ensemble de transmission étant interposé entre ledit vilebrequin (407) et ledit arbre de sortie (415),
ledit premier ensemble de transmission étant configuré pour fournir une sortie de mouvement rotatif à couple variable au niveau dudit arbre de sortie (415) ; et
un pignon de moteur (414) ;
ledit moteur à combustion interne (CI) (101) incluant une unité de moteur électrique (201) montée de manière amovible sur ladite surface externe dudit carter (210) dudit moteur à combustion interne (CI) (101),
ladite unité de moteur électrique (201) incluant
un moteur de traction électrique (420), ledit moteur de traction électrique (420) fournissant une sortie de mouvement rotatif,
un deuxième ensemble de transmission (450), ledit deuxième ensemble de transmission (450) étant interposé entre ledit moteur de traction électrique (420) et ledit arbre de sortie (415) pour fournir un couple variable de sortie de mouvement rotatif au niveau dudit arbre de sortie (415), et
un premier élément de boîtier (201a) et un deuxième élément de boîtier (201b), ledit premier élément de boîtier (201a) et ledit second élément de boîtier (201b) étant assemblés pour former un espace destiné à accueillir ledit moteur de traction électrique (420) et ledit second ensemble de transmission (450), ledit second ensemble de transmission (450) incluant
un second embrayage unidirectionnel (417), ledit second embrayage unidirectionnel (417) étant monté sur un arbre moteur (425) à l'intérieur de ladite unité de moteur électrique (201) pour permettre un mouvement rotatif uniquement depuis ledit moteur de traction électrique (420) jusqu'à ledit arbre de sortie (415), et
ledit arbre moteur (425) s'étendant vers l'extérieur de ladite unité de moteur électrique (201),
**caractérisé en ce que**
ledit pignon moteur (414) comprend une partie annulaire interne (414a), ladite partie annulaire interne (414a) comprenant des cannelures internes et ladite partie annulaire interne (414a) étant configurée pour recevoir une partie cannelée externe (415a) dudit arbre de sortie (415) à partir d'une extrémité et une partie cannelée externe (425a) dudit arbre moteur (425) de ladite unité de moteur électrique (201) à partir de l'autre extrémité ;
ledit arbre moteur (425) étant directement couplé audit arbre de sortie (415) pour fournir de la puissance audit arbre de sortie (415), et
ledit arbre de sortie (415) étant configuré pour recevoir de la puissance soit uniquement de ladite unité de moteur électrique (201), soit en combinaison avec de la puissance dudit moteur à combustion interne (CI) (101).

2. Véhicule de type selle (100) selon la revendication 1, dans lequel ledit second ensemble de transmission (450) comporte :
un arbre intermédiaire (416), ledit arbre intermédiaire (416) étant monté parallèlement audit arbre moteur (425), ledit moteur électrique de traction (420) étant monté sur ledit arbre intermédiaire (416) ;
un deuxième pignon d'entraînement (430), ledit deuxième pignon d'entraînement (430) étant monté rigidement sur ledit arbre intermédiaire (416) ; et
un deuxième engrenage entraîné (431), ledit deuxième engrenage entraîné (431) étant monté rigidement sur ledit arbre moteur (425) et étant configuré pour être engrené avec ledit deuxième engrenage d'entraînement (430) afin de faire varier le couple de sortie entre ledit arbre intermédiaire (416) et ledit arbre moteur (425).

3. Véhicule de type selle (100) selon la revendication 1, dans lequel ledit pignon de moteur (414) fournit une sortie de mouvement rotatif à ladite roue arrière (145) dudit véhicule de type selle par une chaîne (301).

4. Véhicule de type selle (100) selon la revendication 1, dans lequel ledit moteur à combustion interne (CI) (101) comporte un couvercle d'embrayage (210c), ledit couvercle d'embrayage (210c) comportant une pluralité de bossages de montage (212), lesdits bossages de montage (212) étant disposés autour d'une périphérie extérieure dudit couvercle d'embrayage (210c), et lesdits bossages de montage (212) étant configurés pour recevoir une pluralité correspondante de bossages (212) montés à l'extérieur de ladite unité de moteur électrique (201).

5. Véhicule de type selle (100) selon la revendication 1 ou la revendication 2, dans lequel ledit moteur électrique de traction (420) comprend :
un noyau statorique circulaire et fixe (420a), ledit noyau statorique circulaire et fixe (420a) étant fixé à l'un de l'arbre moteur (425) et de l'arbre intermédiaire (416) ; et
un noyau rotorique annulaire monté coaxialement (420b), ledit noyau rotorique annulaire monté coaxialement (420b) étant monté librement à l'un de l'arbre moteur (425) et de l'arbre intermédiaire (416).

6. Véhicule de type selle (100) selon la revendication 1 ou la revendication 2, dans lequel ledit arbre moteur (425) est supporté par une paire de premiers roulements mécaniques (419a et 419b), chaque roulement à rouleaux de ladite paire de premiers roulements mécaniques (419a, 419b) étant disposé sur ledit premier élément de boîtier (201a) et ledit second élément de boîtier (201b).

7. Véhicule de type selle (100) selon la revendication 2, dans lequel ledit arbre intermédiaire (416) est supporté par une paire de seconds roulements mécaniques (432a et 432b), chacun de ladite paire de seconds roulements mécaniques étant disposé sur ledit premier élément de boîtier (201a) et ledit second élément de boîtier (201b) au-dessus de ladite paire de premiers roulements mécaniques (419a et 419b).

8. Véhicule de type selle (100) selon la revendication 1, dans lequel le premier mécanisme de transmission (411, 412, 421, 413) comporte :
un premier embrayage centrifuge (421), ledit premier embrayage centrifuge (421) étant disposé sur un côté gauche dudit vilebrequin (407) ;
un premier pignon d'entraînement (411), ledit premier pignon d'entraînement (411) étant monté librement sur ledit vilebrequin (407) et étant relié audit vilebrequin (407) par ledit premier embrayage centrifuge (421) ;
un premier pignon entraîné (412), ledit premier pignon entraîné (412) étant disposé sur ledit arbre de sortie (415) ; et
un premier embrayage unidirectionnel (413), ledit premier embrayage unidirectionnel (413) étant disposé sur ledit arbre de sortie (415), ledit premier engrenage entraîné (412) étant monté sur ledit premier embrayage unidirectionnel (413), et ledit premier embrayage unidirectionnel (413) étant configuré pour empêcher l'entraînement du mouvement rotatif de revenir sur ledit vilebrequin (407) à partir dudit arbre de sortie (415).

9. Véhicule de type selle (100) selon la revendication 1, dans lequel ledit moteur à combustion interne (CI) (101) a un volume de chambre de combustion, la capacité de ladite volume de chambre de combustion étant inférieure ou égale à 100 centimètres cubes (cc).
